# EUROPEAN PATENT SPECIFICATION

(11) **EP 1 377 025 B1**
(45) Date of publication and mention of the grant of the patent: **03.03.2010**
(21) Application number: 03076947.5
(22) Date of filing: 24.06.2003
(51) Int. Cl.: H04N 1/32, G06T 5/10

(54) **Image scanning and processing system, method of scanning and processing an image and method of selecting one of a plurality of master files comprising data encoding a scanned image**
System und Verfahren der Bildabtastung und der Bildbehandlung, und Verfahren einen eines Mehrzahls von Masterdateien, die Daten eines kodierten abgetaszteten Bildes aufweisen, auszuwählen
Systéme et procédé de traitement et de balayage d'image, méthode de sélection d'un fichier parmi une pluralité de fichiers maitres comprenant des données codifiant une image balayée

(30) Priority: 28.06.2002 EP 02078186
(43) Date of publication of application: 02.01.2004
(73) Proprietor: Océ-Technologies B.V., 5914 CC Venlo (NL)
(72) Inventor: de Graaff, Anthonius A. J., 5924 XN Venlo (NL); Hummel, Tjerk E.C., 5913 SZ Venlo (NL); van Dorsselaer, Etienne L. M. E., 5912 JK Venlo (NL); Schuwer, Marc P., 5629 MP Eindhoven (NL)
(74) Representative: van de Sande, Jacobus

(56) References cited:
- EP-A- 0 589 724
- DE-A- 19 944 687
- US-A- 4 398 222
- US-A- 4 688 190
- US-A- 5 479 206

## Description

The invention relates to an image scanning and processing system, comprising a scanner (1,2) for generating a stream of data encoding a scanned image; a controller (10) for controlling and processing data received from the scanner (1,2); comprising means for creating a preview image with a lower data size than the scanned image from at least part of the data encoding the scanned image; file storage means (13), wherein, in use, the stream of data is written to a master file saved in the file storage means (13), and display means for displaying the preview image.

The invention also relates to a method of scanning and processing an image, comprising scanning an original, thereby generating a stream of data, encoding a scanned Image; saving the scanned image in a master file, and creating a preview image with a lower data size than the scanned image from at least part of the data encoding the scanned image.

The invention also relates to a method of selecting one of a plurality of master files comprising data encoding a scanned image.

When scanning a number of documents, for example for electronic archiving purposes or to create copies, it is desirable that an operator can check the scanned image, to determine whether the scan is of high enough quality. It may be desirable, for Instance to check whether the scan resolution Is high enough to show all the details in a critical region. It is thus desired that the operator be able to select certain regions in the scanned image, and be able to view them at the resolution used to scan the original.

Examples of embodiments of the above-mentioned method for scanning a document, and Image scanning and processing system are known from EP-A-0 569 724. This publication relates to an electronic image processing system. In this system, an initial high-resolution image is held in a high capacity storing means. The system comprises a small capacity high speed storing means and is arranged to transfer portions of the initial high-resolutlon image thereto a portion at a time. The system also comprises a viewing store for storing data representing an image to be displayed and a monitor for displaying the image, The system is arranged to operate in a preview mode. In this preview mode, image data is down converted and written to a destination area for output to the viewing store. The down-converslon of the data is performed by the control processor.

In the prior art, if an operator wishes to select a section from the scanned image, a preview image of the entire scanned Image would have to be created first. This requires processing of all the data comprised in the master file. From a display of the preview image, the user would be able to select a section of the scanned image. This could then be retrieved from the master file for display. Such a process is time consuming and strains the processing capacity of the controller and its memory to the utmost. Additionally, if one wanted to check a second area, the whole process would have to be repeated again.

It is an object of the Invention to provide a system and methods according to the preambles of claims 1, 2 and 10, respectively allowing handling of scanned images with a large data size in a speedy and efficient way.

This object is achieved with the system according to the invention, which is characterised in that the controller (10) comprises means for extracting data encoding the preview image which is a lower resolution rendition of at least part of the scanned Image, from the stream of data, means for writing the extracted data to a thumbnail file, and means for displaying at least part of the preview image as a survey view In a window on the display means before or during the saving to the thumbnall file.

The method of scanning and processing an image according to the invention is characterised in that data encoding the preview image, which is a lower resolution rendition of at least part of the scanned image, is extracted from the stream of data, and written to a thumbnail file, wherein at least part of the preview image is displayed to an operator as a survey view (19) in a window (18) on a display (14,15,16), before or during the saving to the thumbnail file.

Thus, a small file is quickly made available. Even though it is a small file, it is representative of the entire area of the scanned image. Because it is created directly from the stream of data, it is available directly after, or even before the scanning is finished. It can be used for a quick check of the scanning process, in a graphical user interface to select part of the scanned image, or visually to provide other information relating to the scanned image, without requiring processing of large amounts of data comprised in the master file.

Since, at least part of the preview image is displayed to an operator as a survey view In a window on a display, it is possible to perform a quick first check for obvious scanning errors, without loading any of the detailed information comprised in the master file. Original skew, scanning of the original in the wrong direction, or insertion of the original in a scanning array the wrong way up are all easily detectable. Furthermore, since the part of the preview image is displayed before or during the saving to the thumbnail file, the first check can be performed at the earliest possible moment. This allows an operator to break off the scanning process before the entire original has been scanned.

According to an aspect of the invention, a method of selecting one of a plurality of master files comprising data encoding a scanned image, created by using a method according to any one of claims 2-9, is provided, wherein at least part of a thumbnail file comprising data encoding a preview image corresponding to the scanned image with a lower data size than the scanned image is sent to an archive manager, and wherein the archive manager displays the parts as survey previews to the user.

Thus a particularly responsive and informative user interface is provided for selecting archived images. Due to the survey previews, the user knows which image is stored in each master file. Because the thumbnail is already present, it is not necessary to scale down each master file in turn to build up the display.

The invention will now be explained in further detail with reference to the accompanying drawings.
Fig. 1 is a simplified component diagram comprising an embodiment of a system according to the invention.
Fig. 2 is a schematic illustration of an embodiment of the system.
Fig. 3 is a schematic cross-sectional diagram of an embodiment of scanning device for use in connection with the invention.
Fig. 4 is a schematic example of a screen view, provided during execution of an embodiment of the method according to the invention.
Fig. 5 is a flow diagram showing an embodiment of the method according to the invention.

The invention can be used for scanning any type of image, on any type of original, but is particularly useful for scanning wide format originals comprising colour images with randomly distributed areas containing small details. Engineering drawings are a typical example of such originals. Although the maximum width of the original is determined by the width of the scanning array 9, the length is not limited by the physical dimensions of the scanning device 2.

The scanning device 2 is capable of scanning originals at several different resolutions and in several different colour modes. A 1-bit black-and-white mode is possible, but a 24-bit full colour mode is equally possible. In this case, each sample point results in a 24-bit data element. A DIN-A0 sized original, scanned in a 24-bit full colour mode at 600 dots per inch resolution will result in the image on the original being encoded in approximately 1.6 Gbytes of data.

The system comprises a controller 10 for controlling and processing the data received from the scanning array. The term controller in this context is used to denote a combination of hardware and software that performs specific functions in the scanning and processing system. This includes coordination of the various steps needed to scan and process an image, execution of a large number of these steps, and the directing of data streams between the various other components of the system.

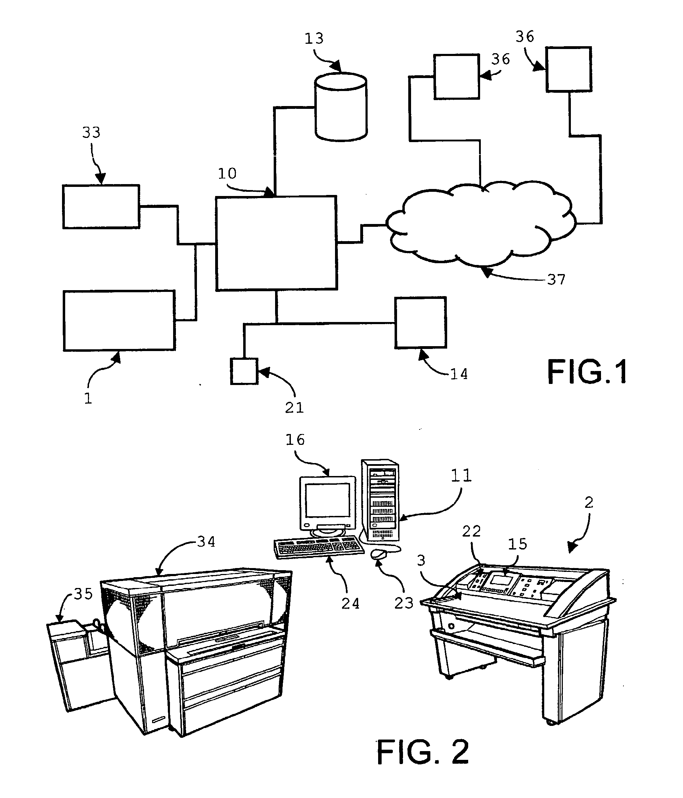

In the system of Fig. 2, the controller 10 substantially comprises of a series of software modules on a workstation 11. Alternatively, the controller 10 or part of the controller 10, could be comprised in the scanning device 2. In this embodiment, the workstation 11 is a computer with at least one processor, random access memory, a hard disk and graphics and network cards.

In operation, the original is transported by the pairs 4,5 of rollers along the plate 7 and across the exposure area 8. The light source 6 illuminates the original sheet at the exposure area 8. An image line of the original document at the image plane is projected via the optical path on the CCD array 9. Electrical signals generated in the elements of the CCD array 9 in correspondence with the line image in the exposure area are read out in parallel and placed in a line buffer. The line buffer is read out for further processing.

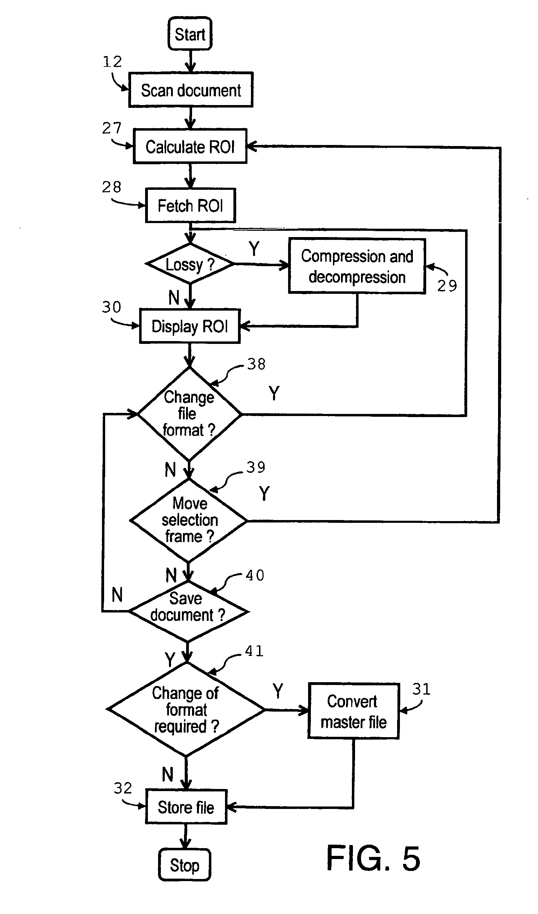

In the embodiment of the method according to the invention which is illustrated in Fig. 5, in a first step 12, the data encoding the scanned image is passed in a stream from the scanner 1 to the controller 10, where it is processed. According to the invention, the controller creates a separate stream of data encoding a preview image with a lower data size from the stream of data coming from the scanner 1. In other words, the original image is scaled down.

There are a number of ways in which the original image can be scaled down. The invention can use any one of them. Pixel sub-sampling is a basic example of a scaling method. In pixel sub-sampling the bit map is resampled; e.g. for a scaling factor of 1:100, ninety-nine pixels over one are removed in both directions. This method has the advantage of being fast. Other methods are, for example, random pixel sub-sampling and black pixel conservation. These methods have the advantage of reducing the data size with a less severe loss of information. Scaling down is carried out on the stream of data that has been read out as it arrives at the controller 10. The preview image is thus generated on the fly.

The extracted data encoding the preview image is written to a thumbnail file, stored on storage means 13, connected to the controller 10. The storage means 13 can, for example, comprise a solid state memory and/or a magnetic hard disk. In the implementation of the system in Fig. 1, they can be a hard disk in the scanning device 2, in the workstation 11, or a replaceable storage medium.

The primary stream of data, which encodes the scanned image in a format with a higher data size, is written to a master file on storage means 13.

Because the preview image encoded in the thumbnail file has a much smaller data size, it can be retrieved quickly and transferred between devices quickly without requiring databuses or network connections with a high bandwidth.

The system of Fig. 1 additionally comprises means 14 of display. In the system of Fig. 2, these means 14 comprise a display 15 in the scanning device 2 and a monitor 16 connected to the workstation 11.

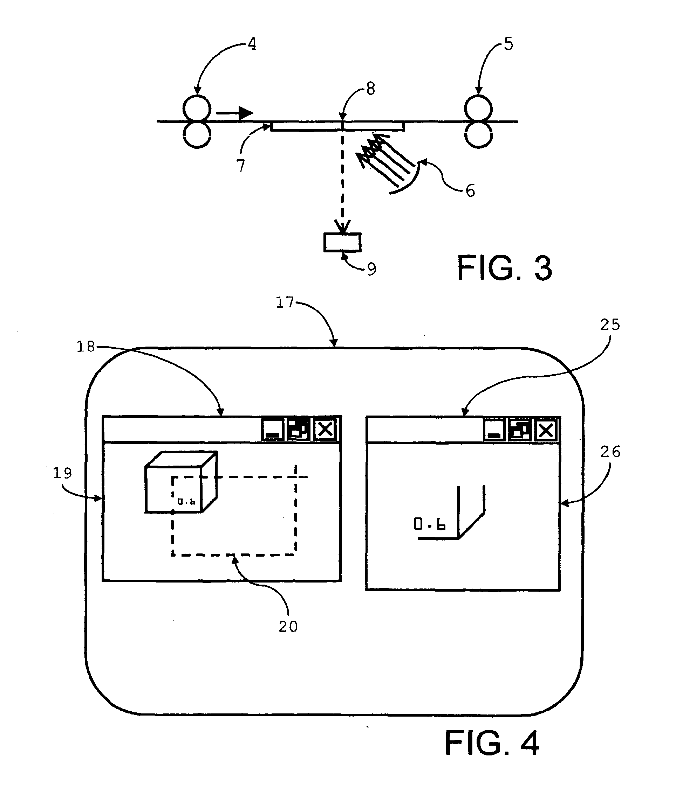

A screen view 17 is provided in Fig. 4. The screen view 17 comprises a first window 18, in which a survey view 19 is provided, generated from the preview image. The survey view 19 can comprise all or part of the preview image. A system in which the operator can specify an area of the image to be used to provide the survey view 19 falls within the scope of the invention.

Completion of the generation of the thumbnail file marks the start of operation of the system. In one embodiment, the survey view 19 is displayed after scanning, once the thumbnail file has been completely stored.

In an advantageous alternative embodiment, the survey view 19 is built up on the fly, by directing the data stream encoding the preview image to the means 14 of display as well as to the thumbnail file. Thus, the operator can break off the scanning process if an error is detected halfway through.

In a preferred embodiment the scanning process comprises an image-processing step on the primary stream of data before creation of the preview image. The image processing is preferably carried out on the stream of data read from the line buffer, i.e. on the fly, to decrease the burden on the controller 10. As an example, automatic background compensation can be carried out at this stage. By carrying out this algorithm on the fly, account can be taken of gradual variations in background intensity level across a very large image. Alternative image processing algorithms that can be carried out on the primary data stream from which the master file and thumbnail file are created, include gamut mapping, deskewing and despeckling.

The survey view 19 is provided for two purposes. Firstly, it allows an operator to gain a quick first impression of the quality of the scanned image. Secondly, it is used to provide a graphical means of selecting an area of the scanned image encoded in the master file, in order to carry out a check of the quality of this scanned image, and also in order to check the legends for identification.

For this purpose, the first window 18 comprises a selection frame 20, laid over the survey view 19. Input means 21 are provided with the system with which an operator can size and position the selection frame 20 within the first window 18 to select a

Region of Interest (ROI).

It will be understood that the input means 21 can comprise buttons on a control panel 22 of the scanning device 2 or a mouse 23 or keyboard 24 connected to the workstation 11. This will depend on the chosen implementation of the means of display 14, and is not essential to the invention.

The screen view 17 of Fig. 4 comprises a second window 25, comprising a detailed view 26 of the scanned image. The detailed view 26 corresponds to the ROI, but it is generated from the master file. The detailed view 26 thus allows a more thorough check of the quality of the scanned image encoded in the master file. By resizing and/or positioning the selection frame 20 within the first window 18 or by operating scroll bars (not shown) of window 25, the operator can select that area of the image that enables the most effective check of the quality. For example, this can be the annotation or a hatched area in a scanned engineering drawing. The default position of the selection frame 20 is at the legends.

Of course, the invention is not dependent on a particular arrangement of the detailed view 26 and the survey view 19. For example, other implementations of the invention are possible, wherein the detailed view 26 and the survey view 19 are presented in one window, for example, wherein the part of the survey view 19 defined by the selection frame 20 is replaced by the detailed view 26 of the ROI. Alternatively, the first and second windows 18,25 can be sequentially displayed.

In a further developed embodiment of the invention, the scanned image is checked for artefacts in step 12 and information specifying detected artefacts is provided with the preview image. The image-processing step is used to check for artefacts, so the check of the image is also carried out by analysing the data in the primary data stream on the fly.

An artefact in this context is a part of the encoded image that possesses certain predefined characteristics. Usually, this will be a departure from the normal, expected characteristics, indicative of a problem in the scanning process. For example, when certain lines are consistently black in a scan generated with the CCD array 9, this could be indicative of a contamination of the scanner 1. A uniformly grey area might be indicative of an area of considerable detail that is not adequately captured due to a scanning resolution that is too coarse.

An indication of the location and, optionally, the type of detected artefact is provided with the data destined for the thumbnail file. This indication is used to display automatically the affected area in the survey view 19 and/or the detailed view 26. As an enhancement, the area can be highlighted, for example in a different colour, in the survey view 19 and/or the detailed view 26, to draw the attention of the user. The type of artefact can be made known to the user, for example by using a different type of highlighting, an annotation, or some other means. Especially if the data encoding the preview image and the detected artefact is directly used to create the survey view 19, the user thus has at his disposal a means for quickly and automatically detecting problems in the scanning process. Scanning of the original can thus be cancelled at an early stage, if the user deems it necessary. If the artefact is not problematic, scanning can continue as normal.

In step 27 of the flow diagram of Fig. 5, a scale ratio is used to translate coordinates (x_{T}, y_{T}), representing the centre point of the selection frame 20, in the preview image in the thumbnail file to coordinates (xₘ, yₘ) corresponding to the same position in the scanned image in the master file. In a next step 28, the data encoding the ROI is extracted from the master file. The system then uses the extracted data to build up the detailed view 26.

In the diagram of Fig. 5, it can be seen that the system initially executes steps 27 and 28 immediately after step 12. In this initial phase, the system uses a default ROI or an ROI that has been specified in advance by the user.

A preferred embodiment of the system according to the invention allows the master file to be converted and stored in a different data format. Examples of data formats that can be used are the Graphics Interchange Format, Tagged Image File Format, Portable Document Format and Computer Aided Acquisition and Logistics Support format. Preferably, the controller 10 is capable of generating a compressed version of the master file. Some of the image formats just mentioned make use of a standard image compression algorithm, in which case selection of a file format automatically entails selections of a specific compression algorithm. Other file formats allow several types of compression to be used. Varieties of the invention wherein compression algorithm and file format can be independently selected are possible. It is equally possible that the system provides the user a choice of file formats and then automatically selects a default compression algorithm associated with the file format.

In the embodiment for which Fig. 5 provides a flow diagram, the operator is able to choose between several types of compression, or to choose no compression at all. The system enables the operator to judge the effects of different types of compression before committing himself to one of them.

There are two categories of compression, lossy and lossless. A lossy compression algorithm results in a compressed image that comprises less information than the original. Lossy compression algorithms, for example, use a quantisation step that rounds off coefficients encoding the image. A lossless compression algorithm does not result in loss of information, but does pare down the amount of data, typically by encoding the data in a more efficient way.

Whenever a lossy type of compression has been selected, the detailed view 26 is generated by first compressing the data encoding the ROI and then decompressing the compressed data in step 29. The system then executes step 30 in which the detailed view 26 is displayed in the second window 25. Thus, the operator can judge whether the loss of data is acceptable, or whether a different file format should be chosen.

Because only the ROI is compressed and then decompressed, the operator is able to reach a conclusion fairly quickly. It is not necessary to compress the entire master file, thus saving time and processing capacity. The master file is only compressed and saved in its entirety, in steps 31 and 32, when the operator has signalled his satisfaction by issuing the appropriate command.

Preferably, the system ensures that the part of the scanned image representing the region of interest is chosen to be larger than a size leading to compression artefacts. This feature is only meaningful in combination with certain types of compression algorithms. The algorithms decompose the image into a number of spatial frequency components. Distortion of the image occurs, when the number of pixels in the ROI is too small. In this case, the higher frequency components cannot be accurately determined. Reconstruction of the image, during decompression, will result in an image with artefacts, especially in the sections of the image adjacent to the boundaries. This can be prevented by ensuring that the ROI is large enough compared to the sample size of the compression algorithm.

Various implementations of the means of ensuring this are conceivable within the scope of the invention. It is possible to prevent a user from resizing the selection frame 20 below certain dimensions. Another variant would be to increase the size of the selected ROI to the specified minimum dimensions automatically.

Fig. 5 illustrates the fact that the user can try out several different file formats before committing himself to one of them. If the detailed view 26 generated in step 30 is not satisfactory, the file format can be changed. Steps 29 and 30 are then repeated.

If the user desires to check several parts of the image, the selection frame 20 can be resized, in which case the system returns to step 27 to generate a new detailed view 26 of the ROI that has now been selected. An automatic return to step 27 implies an embodiment of the invention wherein the detailed view 26 is automatically updated upon resizing or repositioning of the selection frame 20. In variants of the system, the access time of the file storage means 13 or the bandwidth of connections between the controller 10 and file storage means 13 could be limited compared to the amount of data encoding the image in the master file. In that case, a trigger, e.g. a user command, could be specified to start the build-up of the detailed view 26. This would make the system faster.

Finally, the user has the option to indicate his satisfaction by issuing the command to save the master file (step 40). When the user has entered the appropriate command, the master file is saved. Whenever a certain type of image compression has been specified (step 41), either explicitly or implicitly through selection of a file format that involves image compression, the master file will be compressed, in step 31, before being saved in the specified file format, in step 32.

The invention can be used both to scan documents to create an electronic archive, or for copying documents. The schematic diagram of Fig. 1 shows a printing device 33 connected to the controller 10. In Fig. 2, this is implemented in the shape of a printer 34 with a document folder and collator 35 attached. The arrangement of Fig. 2 is especially useful for generating copies of wide-format documents.

The printing device 33 can use any number of printing techniques. It can be a thermal inkjet printer, a pen plotter, or a press system based on organic photoconductor technology, for instance.

To illustrate the use of the invention in connection with an electronic archive, the system of Fig. 1 comprises several terminals 36. The terminals 36 can gain access to the file storage means 13 through a network 37. In this case, access involves the controller 10, but it will be understood that where the file storage means 13 comprise a separate server, this server would be directly connected to the network 37.

For ease of access, the thumbnail file is preferably saved with the master file. An archive manager is used to display at least part of the image encoded in the thumbnail file to the user of a terminal 36. Indeed, a number of survey previews of stored images can be provided in a menu. This enables the user to recognise the image. Because there is less data in the thumbnail file, the archive manager can build up the selection menu with the survey previews quickly, and more previews can be used. Because the thumbnail files that have originally been created during the scanning process are used, there is no need to wait for the system to recreate the survey previews from the stored master files. Thus, the user can browse through the repository of images in the stored master files.

## Claims

1. Image scanning and processing system, comprising
a scanner (1,2) for generating a stream of data encoding a scanned image:
a controller (10) for controlling and processing data received from the scanner (1,2) comprising means for creating a preview image with a lower data size than the scanned image from at least part of the data encoding the scanned image; file storage means (13), wherein, in use, the stream of data is written to a master file saved in the file storage means (13), and display means for displaying the preview image; **characterised in that** the controller (10) comprises means for extracting data encoding the preview image, which is a lower resolution rendition of at least part of the scanned Image, from the stream of data, means for writing the extracted data to a thumbnail file, and means for displaying at least part of the preview image as a survey view in a window on the display means before or during the saving to the thumbnail file.

2. Method of scanning and processing an image, comprising scanning an original, thereby generating a stream of data, encoding a scanned image; saving the scanned image In a master file, and creating a preview image with a lower data size than the scanned image from at least part of the data encoding the scanned image, **characterised in that** data encoding the preview image, which is a lower resolution rendition of at least part of the scanned image, is extracted from the stream of data, and written to a thumbnail file, wherein at least part of the preview image Is displayed to an operator as a survey view (19) in a window (18) on a display (14,15,16), before or during the saving to the thumbnail file.

3. Method according to claim 2, wherein part of the scanned image representing a region of interest is displayed to an operator as a detailed view (26) of the region of interest in a window (25) on a display (14,15,16).

4. Method according to claim 3, comprising providing a selection frame (20) in the survey view (19), wherein an operator selects the region of interest by sizing and positioning the selection frame (20) in the survey view (19).

5. Method according to claim 3 or 4, wherein the part of the scanned image representing the region of interest is converted to a different data format before being displayed.

6. Method according to claim 5, wherein the part of the scanned image representing the region of interest is compressed when converted to the different data format and decompressed before being displayed.

7. Method according to claim 6, wherein the part of the scanned image representing the region of interest is chosen to be larger than a size leading to compression artefacts.

8. Method according to any one of claims 2-7, comprising an image-processing step on the stream of data before creation of the preview image.

9. Method according to any one of claims 2-8, wherein the scanned image is checked for artefacts, and wherein Information specifying detected artefacts is provided with the preview image.

10. Method of selecting one of a plurality of master files comprising data encoding a scanned image, created by using a method according to any one of claims 2-9, wherein at least part of a thumbnail file comprising data encoding a preview image corresponding to the scanned image with a lower data size than the scanned image is sent to an archive manager, and wherein the archive manager displays the parts as survey previews to the user.

## Patentansprüche

1. Bildabtastungs- und Bildverarbeitungssystem, umfassend:
einen Scanner (1, 2) zum Erzeugen eines Datenstroms, der ein abgetastetes Bild codiert; eine Steuereinrichtung (10) zur Steuerung und Verarbeitung von Daten, die von dem Scanner (1, 2) empfangen werden, mit Mitteln zum Erzeugen eines Vorschaubildes mit einem niedrigeren Datenumfang als das abgetastete Bild aus wenigstens einem Teil der Daten, die das abgetastete Bild codieren; Dateispeichermittel (13), wobei im Gebrauch der Datenstrom in eine Masterdatei geschrieben wird, die in den Dateispeichermitteln (13) gesichert ist, und eine Anzeigeeinrichtung zur Anzeige des Vorschaubildes,
**dadurch gekennzeichnet, daß** die Steuereinrichtung (10) Mittel zur Extraktion von Daten, die das Vorschaubild codieren, das eine Wiedergabe mit geringerer Auflösung von wenigstens einem Teil des abgetasteten Bildes ist, aus dem Datenstrom, Mittel zum Schreiben der extrahierten Daten in eine Thumbnaildatei, und Mittel zum Anzeigen wenigstens eines Teils des Vorschaubildes als eine Übersichtsansicht in einem Fenster auf der Anzeigeeinrichtung vor oder während des Sicherns in die Thumbnaildatei aufweist.

2. Verfahren zum Abtasten und Verarbeiten eines Bildes, mit Abtastung eines Originals und dadurch Erzeugung eines Datenstroms, der das abgetastete Bild codiert; Sichern des abgetasteten Bildes in einer Masterdatei, und Erzeugen eines Vorschaubildes mit einem geringeren Datenumfang als das abgetastete Bild aus wenigstens einem Teil der Daten, die das abgetastete Bild codieren,
**dadurch gekennzeichnet, daß** die Daten, die das Vorschaubild codieren, das eine Wiedergabe mit geringerer Auflösung von wenigstens einem Teil des abgetasteten Bildes ist, aus dem Datenstrom extrahiert und in eine Thumbnaildatei geschrieben werden, wobei wenigstens ein Teil des Vorschaubildes einem Bediener vor oder während des Sicherns in die Thumbnaildatei als eine Übersichtsansicht (19) in einem Fenster (18) auf einem Display (14, 15,16) angezeigt wird.

3. Verfahren nach Anspruch 2, bei dem ein Teil des abgetasteten Bildes, der ein interessierendes Gebiet repräsentiert, einem Bediener als eine Detailansicht (26) des interessierenden Gebietes in einem Fenster (25) auf einem Display (14, 15, 16) angezeigt wird.

4. Verfahren nach Anspruch 3, mit Bereitstellen eines Auswahlrahmens (20) in der Übersichtsansicht (19), wobei ein Bediener das interessierende Gebiet durch Größeneinstellung und Positionierung des Auswahlrahmens (20) in der Übersichtsansicht (19) auswählt.

5. Verfahren nach Anspruch 3 oder 4, bei dem der Teil des abgetasteten Bildes, der das interessierende Gebiet repräsentiert, in ein anderes Datenformat konvertiert wird, bevor er angezeigt wird.

6. Verfahren nach Anspruch 5, bei dem der Teil des abgetasteten Bildes, der das interessierende Gebiet repräsentiert, bei der Konvertierung in das andere Datenformat komprimiert und, bevor er angezeigt wird, dekomprimiert wird.

7. Verfahren nach Anspruch 6, bei dem der Teil des abgetasteten Bildes, der das interessierende Gebiet repräsentiert, größer gewählt wird als eine Größe, die zur Kompression von Artefakten führt.

8. Verfahren nach einem der Ansprüche 2 bis 7, mit einem Bildverarbeitungsschritt an dem Datenstrom vor der Erzeugung des Vorschaubildes.

9. Verfahren nach einem der Ansprüche 2 bis 8, bei dem das abgetastete Bild auf Artefakte überprüft wird und bei dem Information, die detektierte Artefakte spezifiziert, mit dem Vorschaubild bereitgestellt wird.

10. Verfahren zur Auswahl einer von mehreren Masterdateien, die Daten enthalten, die ein abgetastetes Bild codieren und die nach einem Verfahren gemäß einem der Ansprüche 2 bis 9 erzeugt werden, bei dem wenigstens ein Teil einer Thumbnaildatei, die Daten enthält, die ein dem abgetasteten Bild entsprechendes Vorschaubild mit einem geringeren Datenumfang als das abgetastete Bild, an einen Archivmanager gesandt wird, und bei dem der Archivmanager den Benutzer die Teile als Übersichtsvorschauen anzeigt.

## Revendications

1. Système de numérisation et de traitement d'image, comprenant :
un dispositif de numérisation (1, 2) destiné à générer un flux de données qui codent une image numérisée ;
un contrôleur (10) destiné à contrôler et à traiter des données reçues en provenance du dispositif de numérisation (1, 2) comprenant des moyens destinés à créer une image de prévisualisation qui présente une taille de données inférieure à celle de l'image numérisée à partir au moins d'une partie des données qui codent l'image numérisée ; des moyens de stockage de fichiers (13), dans lesquels, en service, le flux de données est écrit vers un fichier permanent sauvegardé dans les moyens de stockage de fichiers (13) ; et des moyens d'affichage destinés à afficher l'image de prévisualisation ;
**caractérisé en ce que** le contrôleur (10) comprend des moyens destinés à extraire des données qui codent l'image de prévisualisation, qui est une interprétation à plus faible résolution d'au moins une partie de l'image numérisée, à partir du flux de données ; des moyens destinés à écrire les données extraites vers un fichier d'images miniatures ; et des moyens destinés à afficher au moins une partie de l'image de prévisualisation comme une vue d'ensemble dans une fenêtre des moyens d'affichage avant ou au cours de la sauvegarde vers le fichier d'images miniatures.

2. Procédé de numérisation et de traitement d'une image, comprenant les étapes consistant à : numériser un original ; générer de ce fait un flux de données ; coder les images numérisées ; sauvegarder l'image numérisée dans un fichier permanent ; et créer une image de prévisualisation qui présente une taille de données inférieure à celle de l'image numérisée à partir au moins d'une partie des données qui codent l'image numérisée ;
**caractérisé en ce que** les données qui codent l'image de prévisualisation qui est une interprétation à plus faible résolution d'au moins une partie de l'image numérisée, sont extraites à partir du flux de données, et écrites vers un fichier d'images miniatures, dans lequel au moins une partie de l'image de prévisualisation est affichée à l'intention d'un opérateur comme une vue d'ensemble (19) dans une fenêtre (18) d'un affichage (14, 15, 16), avant ou au cours de la sauvegarde vers le fichier d'images miniatures.

3. Procédé selon la revendication 2, dans lequel une partie de l'image numérisée qui représente une région d'intérêt, est affichée à l'intention d'un opérateur comme une vue détaillée (26) de la région d'intérêt dans une fenêtre (25) d'un affichage (14, 15, 16).

4. Procédé selon la revendication 3, comprenant une étape consiste à fournir un cadre de sélection (20) dans la vue d'ensemble (19), dans lequel un opérateur sélectionne la région d'intérêt en dimensionnant et en positionnant le cadre de sélection (20) dans la vue d'ensemble (19).

5. Procédé selon la revendication 3 ou la revendication 4, dans lequel la partie de l'image numérisée qui représente la région d'intérêt, est convertie dans un format de données différent avant d'être affichée.

6. Procédé selon la revendication 5, dans lequel la partie de l'image numérisée qui représente la région d'intérêt, est compressée quand elle est convertie dans le format de données différent et décompressée avant d'être affichée.

7. Procédé selon la revendication 6, dans lequel la partie de l'image numérisée qui représente la région d'intérêt est choisie pour être plus grande qu'une taille qui entraîne des artefacts de compression.

8. Procédé selon l'une quelconque des revendications 2 à 7, comprenant une étape de traitement d'image sur le flux de données avant la création de l'image de prévisualisation.

9. Procédé selon l'une quelconque des revendications 2 à 8, dans lequel on vérifie s'il y a des artefacts dans l'image numérisée, et dans lequel des informations spécifiant les artefacts détectés sont fournies avec l'image de prévisualisation.

10. Procédé de sélection d'un fichier permanent parmi une pluralité de fichiers permanents comprenant des données qui codent des images numérisées, créés en utilisant un procédé selon l'une quelconque des revendications 2 à 9, dans lequel au moins une partie d'un fichier d'images miniatures comprenant des données qui codent une image de prévisualisation correspondant à l'image numérisée avec une taille de données inférieure à celle de l'image numérisée, est envoyée à un gestionnaire
